# EUROPÄISCHE PATENTSCHRIFT

(11) **EP 0 713 755 B1**
(45) Veröffentlichungstag und Bekanntmachung des Hinweises auf die Patenterteilung: **10.05.2000**
(21) Anmeldenummer: 95117980.3
(22) Anmeldetag: 15.11.1995
(51) Int. Cl.: B29C 33/02, B29C 33/56

(54) **Verfahren und Vorrichtung zur Herstellung von Kunststoffteilen**
Method and apparatus for the production of plastic pieces
Procédé et appareil pour la fabrication de pièces en matière plastique

(30) Priorität: 24.11.1994 DE 4441815
(43) Veröffentlichungstag der Anmeldung: 29.05.1996
(73) Patentinhaber: TUHH-Technologie GmbH, D-21079 Hamburg (DE)
(72) Erfinder: Stumpf, Hauke, Dipl.-Ing., D-36304 Alsfeld (DE); Schulte, Karl, Prof. Dr.-Ing., D-21244 Buchholz i.d.N. (DE)
(74) Vertreter: Niedmers, Ole, Dipl.-Phys.

(56) Entgegenhaltungen:
- EP-A- 0 361 390
- DE-A- 3 832 284
- FR-A- 2 159 231
- JP-A- 5 162 139
- JP-A- 61 228 914
- US-A- 3 249 672
- US-A- 5 064 597

## Beschreibung

Die Erfindung betrifft ein Verfahren nach Anspruch 1 zur Herstellung eines Körpers aus Kunststoff, beispielsweise thermoplastischem Kunststoff, gefüllten Thermoplasten oder Verbundwerkstoffen, sowie eine Vorrichtung nach Anspruch 8 zum Herstellen eines Körpers aus Kunststoff, insbesondere zum Durchführen des Verfahrens gemäß der Erfindung.

Aus der EP-A-0 361 390 ist eine Vorrichtung und ein Verfahren zum Blasformen, insbesondere zum Herstellen von hohlen, doppelwandigen Plastikartikeln durch Blasformen bekannt. Die bekannte Vorrichtung weist einen Extruder auf und eine Form mit darin ausgebildeten Wärmemitteldurchgängen. Jede der Formhälften umfaßt einen äußeren Schalenbereich des Schalengehäuses, das ein inneres Schalenteil aufweist, das derart geformt ist, daß die Formhälften in Kombination einen Formhohlraum in den inneren Schalenteilen definieren. Hierbei ist ein innerer wärmeisolierender Bereich innerhalb des Schalengehäuses angeordnet, wobei das innere Schalenteil im wesentlichen aus einem metallischen Werkstoff mit einer hohen thermischen Leitfähigkeit besteht. Der innere wärmeisolierende Bereich weist eine Wärmeisolation gegen eine Wärmetransmission von dem inneren Schalenteil auf, das die Form des zu formenden Teiles ausmacht.

Das bekannte Verfahren umfaßt die Schritte eines Ausstoßes eines Vorpreßlings eines plastifizierten Werkstoffs in eine Lücke zwischen die Formhälften während die Form geöffnet ist, Blasen von Gas in den Vorpreßling, wenigstens während des Zeitraums, wo die Form geschlossen ist, so daß der Vorpreßling geformt wird, um ein Hohlteil zu bilden, und Kühlen des Formteils kurz bevor das Formelement geöffnet wird, wobei sowohl die innere Formfläche des Formelementes als auch der Vorpreßling an dessen äußerer Oberfläche durch einen kontinuierlichen, U-förmig geformten Strahlungsheizer, der in der Lücke der Formhälfte angeordnet ist, gewärmt wird, um den Vorpreßling teilweise zu bearbeiten, während die Form geöffnet ist. Auch ist daraus ein Kühlungsschritt des geformten Teils bekannt, wobei die Kühlung auf der äußeren Oberfläche des geformten Teils durch Kühlen der Formteile an deren inneren Schalenteilen durch Fließen von einem Kühlmedium durch die Wärmemediumdurchgänge der Form nach dem Schließen der Form erreicht wird.

Bei der Herstellung von Kunststoffteilen, beispielsweise im Spritzgießverfahren oder durch Extrusionsblasformen, handelt es sich um eine Massenanfertigung, so daß es auch aus wirtschaftlichen Gründen wichtig ist, die Zykluszeiten bei der Herstellung von derartigen Kunststoffteilen oder Kunststoffkörpern möglichst klein zu halten. Häufig ist es jedoch erforderlich, daß die für die Herstellung der Kunststoffteile verwendeten Pressformen während eines Zyklus aufgewärmt und anschließend wieder abgekühlt werden. Häufig wird dabei so verfahren, daß zunächst die heiße plastifizierte Kunststoffmasse in eine heiße Pressform gegeben wird und diese anschließend gekühlt wird, bis der Kunststoffkörper eine ausreichende Formsteifigkeit aufweist, so daß er aus der Pressform genommen werden kann. Es ist natürlich auch möglich, daß der Kunststoff zunächst in die kalte Form gegeben und zusammen mit der Form erhitzt wird. Die Zykluszeit für die Herstellung von Kunststoffteilen wird daher u.a. wesentlich durch die notwendige Zeit für das Aufheizen der Pressform einerseits und das Abkühlen der Pressform andererseits beeinflußt. Die Temperaturänderungsgeschwindigkeit sowohl der Kunststoffmasse als auch der Pressform ist jedoch eine physikalische Materialeigenschaft, die nicht beliebig variierbar ist.

Insbesondere bei der Verarbeitung von thermoplastischen Verbundwerkstoffen kommt die physikalische Begrenzung der Temperaturänderungsgeschwindigkeit zum Tragen, da in diesem Fall relativ hohe Prozeßtemperaturen, beispielsweise bis zu 400°C, bei der Verarbeitung von Polyetherketonen erforderlich sind. Die Aufheiz- und Abkühlzeiten der Pressform werden dementsprechend lang andauern, so daß die gesamte Periode des Zyklus verlängert wird. Dies hat den Nachteil, daß die Herstellung von Teilen aus derartigen Materialien für größere Stückzahlen unwirtschaftlich ist. Als Prozeßtemperatur ist hier die Verarbeitungstemperatur zu verstehen, die in dem Formhohlraum herrscht bzw. die Verarbeitungstemperatur, die an den Formhohlraum angrenzenden inneren Oberflächen der Form auftritt, wenn sich der Kunststoff in der Form befindet.

Eine Pressform, die beispielsweise beim Spritzgießverfahren oder beim Extrusionsblasformen verwendet wird, besteht insbesondere aufgrund der erforderlichen Formsteifigkeit häufig aus relativ massiv gefertigten Eisenwerkstoffen, beispielsweise Stahl, die somit in den meisten Fällen eine große Masse aufweisen. Dies hat zur Folge, daß für Formteile, die eine große Wärmekapazität und eine relativ geringe Wärmeleitfähigkeit besitzen, bei höheren Temperaturdifferenzen entsprechend längere Aufheiz- und Abkühlzeiten erforderlich sind. Grundsätzlich ist es zwar möglich, daß eine wesentliche Erhöhung der Temperaturänderungsgeschwindigkeit, beispielsweise beim Aufheizen, durch eine entsprechend große Heizleistung bewirkt werden kann, jedoch lassen sich insbesondere bei großen Werkstücken mit entsprechend großen Pressformen derartige Wärmestromdichten z.Zt. nicht wirtschaftlich bewerkstelligen. Ferner stellt die Bereitstellung einer derartig großen Heizleistung unter Umständen auch eine starke Belastung der Umwelt dar, da die eingebrachte Wärmeenergie anschließend unmittelbar wieder der Pressform entzogen werden muß.

Um die Energieverluste zu reduzieren, sind aus der DE-A-38 32 284 ein Verfahren und eine Vorrichtung zum thermischen Umsteuern eines Körpers zwischen einer Aufheiz- und einer Abkühlphase für das Behandeln von Kunststoffen bekannt, bei welchem Verfahren die Temperatur in der Aufheizphase im wesentlichen von einer elektrisch aufheizbaren Schicht, die an den Formenhohlraum angrenzt, bestimmt wird. Die Abkühlphase wird dabei im wesentlichen von der Temperatur des restlichen Körpers der Pressform bestimmt, die auf einer niedrigen Temperatur gehalten wird. Eine direkte Kühlung der innenliegenden Schicht ist dabei nicht vorgesehen. Insbesondere bei der Verarbeitung von größeren Kunststoffteilen oder Verbundwerkstoffteilen, die zum einen ein größeres Materialvolumen aufweisen können und zum anderen eine erhöhte Bearbeitungstemperatur benötigen, besteht jedoch bei dem bekannten Verfahren und der bekannten Vorrichtung ein Nachteil darin, daß gegebenenfalls die eingebrachte Wärmeenergie nicht zur Aufschmelzung des Werkstoffes ausreicht. Ferner ist es mit einer derartigen Vorrichtung nur möglich, den Abkühlprozeß zu beschleunigen.

Es hat sich jedoch herausgestellt, daß die Aufheizperiode in einem stärkeren Ausmaß von den oben beschriebenen Begrenzungen betroffen ist. Insbesondere im Falle elektrischer Beheizung erfolgt die Aufheizung linear mit der Zeit und dauert deshalb in Abhängigkeit von der Größe des Kunststoffteils einerseits und der Größe der zu überwindenden Temperaturdifferenz andererseits entsprechend länger. Aber auch im Falle konvektiver Beheizung mit heißen Fluiden bestehen größere Probleme bei dem Aufheizvorgang als beispielsweise bei der konvektiven Abkühlung. Insbesondere ist die Verwendung von Wasser bei höheren Temperaturen aufgrund der relativ niedrigen Verdampfungstemperatur bei den i.a. üblichen Drücken nicht mehr ohne weiteres möglich. Die häufig verwendeten Thermoöle weisen jedoch eine schlechtere Wärmeübertragungseigenschaft auf, so daß auch hier die Aufheizperiode bei höheren Betriebstemperaturen problematisch ist.

Der Erfindung liegt daher die Aufgabe zugrunde, ein Verfahren zu schaffen, bei welchem insbesondere die Aufwärmzeit eines Zyklus verkürzt werden kann. Ferner liegt der Erfindung die Aufgabe zugrunde, eine Vorrichtung zu schaffen, mit der eine entsprechend kürzer bemessene Aufheizperiode möglich ist.

Die Aufgabe wird dadurch gelöst, daß bei dem erfindungsgemäßen Verfahren nach Anspruch 1 der Kunststoff in eine temperierbare Form, die wenigstens einen Hohlraum begrenzt, dessen Kontur der äußeren Kontur des Körpers entspricht, eingegeben wird, wobei während der Herstellung die Form erhitzt wird und zumindest die Entnahme des Körpers bei gekühlter Form erfolgt, und wobei der sich an den Hohlraum anschließende innere Bereich der Form zumindest teilweise von dem dem Hohlraum abgekehrten äußeren Bereich der Form gekühlt und aufgeheizt wird, während der äußere Bereich auf einer Temperatur gehalten wird, die höher als die Temperatur der inneren Wandung des inneren Bereichs bei der Entnahme ist.

Diese Verfahrensführung hat den Vorteil, daß die Temperaturänderungen, die für die Herstellung eines Kunststoffteils erforderlich sind, auf den inneren Bereich der Form, also den Bereich, der unmittelbar mit dem Kunststoffteil in Berührung steht, begrenzt werden. Gleichzeitig wird der äußere Bereich der Form auf einer zumindest näherungsweise konstanten Temperatur gehalten, die höher als die für die Entnahme des Kunststoffteils aus der Form erforderliche Temperatur ist. Somit dient der äußere Bereich der Form, der vorzugsweise wesentlich größer als der innere Bereich der Form bemessen ist, als Wärmeenergielieferant bzw. Wärmespeicher, wodurch das Aufheizen des inneren Bereiches beschleunigt werden kann.

In einer vorteilhaften Ausführungsform der Erfindung ist vorgesehen, daß der äußere Bereich auf einer im wesentlichen konstanten Temperatur gehalten wird, die in etwa der Temperatur der heißen Form, also der Prozeßtemperatur entspricht. Dies hat den Vorteil, daß sich der innere Bereich der Form nach Beendigung des Abkühlvorganges allein aufgrund der Temperaturdifferenz auf die erforderliche Prozeßtemperatur aufheizen kann. Je nach Ausführungsform ist es dabei nicht mehr erforderlich, daß der innere Bereich zusätzlich beheizt wird.

Es kann beispielsweise vorgesehen werden, daß während der Aufheizperiode sowohl der äußere Bereich als auch der innere Bereich durch konvektive oder elektrische Heizung aufgewärmt werden. Zweckmäßig ist es jedoch, daß der innere und der äußere Bereich der Form unabhängig voneinander temperiert werden können. Dies hat den Vorteil, daß der äußere Bereich stets auf einer konstanten Temperatur gehalten werden kann, während der innere Bereich während der Abkühlphase entsprechend abgekühlt und während der Aufheizphase durch eine zusätzliche Heizung besonders schnell mit der Unterstützung der Wärmeenergie, die von dem äußeren Bereich geliefert wird, aufgeheizt werden kann.

Dabei kann vorgesehen werden, daß wenigstens ein Bereich konvektiv beheizt wird. Es kann aber auch zweckmäßig sein, daß wenigstens ein Bereich elektrisch beheizt wird. Vorteilhaft ist es weiterhin, daß zumindest der innere Bereich konvektiv gekühlt wird. Die konvektive Kühlung kann beispielsweise mit Wasser erfolgen, wodurch ein besonders guter Wärmeübergang zwischen dem Kühlmedium und der Form erreicht werden kann.

Es ist offensichtlich, daß mit dem Verfahren gemäß der Erfindung die Aufheizphase eines Zyklus wesentlich verkürzt werden kann. Dies liegt zum einen darin, daß von der niedrigen Entnahmetemperatur lediglich ein kleiner innerer Bereich auf die heiße Prozeßtemperatur aufgeheizt werden muß. Zum anderen wird durch den vorzugsweise größeren äußeren Bereich beim Aufheizvorgang eine Wärmemenge zur Verfügung gestellt, die den Aufheizvorgang weiter beschleunigt. Die Temperatur des äußeren Bereiches kann dabei durch allgemein bekannte Mittel im wesentlichen aufrechterhalten werden. Der äußere Bereich muß daher nicht abwechselnd abgekühlt und anschließend wieder aufgeheizt werden, sondern es muß lediglich die eintretende Wärmedifferenz aufgrund des Entzuges der Wärmeenergie durch den inneren Bereich während des Abkühl- und Aufheizvorganges ausgeglichen werden. Durch diese Maßnahme kann ferner der Herstellungsprozeß energetisch wirtschaftlich ablaufen. Zweckmäßig kann es sogar sein, wenn die Temperatur des äußeren Bereiches größer als die Prozeßtemperatur ist. Dadurch kann eine weitere Beschleunigung der Aufheizphase bewirkt werden. Zu beachten ist dabei, daß die Temperatur des äußeren Bereiches so gewählt wird, daß ein Abkühlen des inneren Bereiches nach wie vor mit technisch sinnvollen und wirtschaftlichen Maßnahmen möglich bleibt.

Die Vorrichtung zum Herstellen eines Körpers aus thermoplastischem Kunststoff weist eine Form auf, die wenigstens einen Hohlraum begrenzt, dessen innere Kontur der äußeren Kontur des Körpers entspricht, wobei der an den Hohlraum angrenzende innere Bereich der Form zumindest teilweise aus einem Material besteht, das eine andere Wärmeleitfähigkeit besitzt, als das des dem Hohlraum abgekehrten äußeren Bereichs der Form. Die Vorrichtung ist dadurch gekennzeichnet, daß das Material des äußeren Bereiches eine hohe spezifische Wärmekapazität aufweist und ein Temperierungsmittel, mit dem der äußere Bereich auf einer Temperatur gleich oder höher der Prozeßtemperatur haltbar ist.

Zweckmäßig ist es dabei, daß der innere Bereich eine höhere Temperaturleitfähigkeit als der äußere Bereich besitzt. Diese Ausführungsform hat den Vorteil, daß die Temperatur des inneren Bereichs wesentlich schneller geändert werden kann.

In einer vorteilhaften Ausgestaltung der Erfindung ist vorgesehen, daß der innere Bereich der Form unabhängig vom äußeren Bereich der Form temperierbar ist. Dies hat den Vorteil, daß lediglich der innere Bereich bei dem Abkühlvorgang der Form für die Entnahme des Kunststoffteils gekühlt werden muß, während der äußere Bereich beispielsweise auf einer höheren Temperatur gehalten werden kann. Während der Aufheizphase unterstützt somit der äußere Bereich die Beheizung des inneren Bereiches, da die Wärmemenge im äußeren Bereich auf den inneren Bereich übertragen wird.

In einer vorteil haften Ausgestaltung der Erfindung ist vorgesehen, daß der innere Bereich hinsichtlich seines Volumens wesentlich kleiner als der äußere Bereich ist. Dies hat den Vorteil, daß die Energie, die zum Aufheizen der Form, d.h. der Wandungen, die den Formenhohlraum begrenzen reduziert werden kann. Das gleiche gilt entsprechend beim Abkühlen dieser Wandungen, da nur noch eine geringe Wärmemenge abgeführt werden muß. Dabei kommt es darauf an, daß die absolute Wärmekapazität des äußeren Bereichs größer als die des inneren Bereichs ist.

Zweckmäßig kann es sein, daß zumindest einer der Bereiche konvektiv beheizbar ist. Es kann jedoch auch vorgesehen werden, daß wenigstens ein Bereich elektrisch beheizbar ist. In einer anderen Ausgestaltung der Erfindung kann auch vorgesehen werden, daß zumindest der innere Bereich konvektiv gekühlt wird. Dabei ist es aufgrund der hohen abführbaren Wärmemenge zweckmäßig, daß der innere Bereich eine Wasserkühlung aufweist.

In einer anderen weitergehenden Ausführungsform der Erfindung ist vorgesehen, daß der innere Bereich lösbar mit dem äußeren Bereich verbunden ist. Dies hat den Vorteil, daß der als Wärmespeicher dienende äußere Bereich universell für mehrere Formen verwendet werden kann. Dabei kann die Anordnung im einzelnen so getroffen sein, daß die äußere Kontur der jeweils verwendeten Teile, die den inneren Bereich bilden, der inneren Kontur der Teile entspricht, die den äußeren Bereich der Form bilden.

Weiterhin ist es vorteilhaft, daß der innere Bereich aus einer Aluminiumlegierung oder einem Messingwerkstoff besteht. Es kann aber auch zweckmäßig sein, daß der innere Bereich aus einer Kupferlegierung besteht. Diese Werkstoffe weisen eine hohe Temperaturleitfähigkeit auf, so daß ein Aufheizvorgang oder ein Abkühlvorgang in entsprechend kurzer Zeit durchgeführt werden kann.

Der äußere Bereich besteht in einer Ausführungsform der Erfindung aus Stahl. Dies hat den Vorteil, daß zunächst der innere Bereich, der vorzugsweise dünnwandig ausgebildet ist, durch den äußeren Bereich eine mechanische Abstützung erhält. Ferner weist Stahl eine geringe Temperaturleitfähigkeit und ein hohes Wärmespeichervermögen auf, so daß die gewünschten Wärmeübertragungseigenschaften vom äußeren Bereich zum inneren Bereich bewirkt werden können.

In einer anderen Ausführungsform der Erfindung ist vorgesehen, daß zwischen dem inneren Bereich und dem äußeren Bereich wenigstens eine Isolationsschicht angeordnet ist. Die Anordnung einer Isolationsschicht hat den Vorteil, daß ein zu starker Wärmeübergang vom äußeren Bereich, beispielsweise während der Abkühlphase, vermieden werden kann. Zweckmäßig kann es sein, daß die Isolationsschicht einen temperaturabhängigen Wärmedurchgangskoeffizienten aufweist. Auch kann es zweckmäßig sein, daß der Wärmedurchgangskoeffizient der Isolationsschicht einstellbar ist.

In einer anderen Ausführungsform der Erfindung ist ferner vorgesehen, daß zwischen dem inneren Bereich und dem äußeren Bereich der Form wenigstens eine nachgiebige Schicht angeordnet ist. Diese Anordnung hat den Vorteil, daß eventuell vorhandene unterschiedliche Wärmeausdehnungsverhalten der einen oder der anderen Schicht aufgrund der Temperaturänderungen und der eventuell vorhandenen unterschiedlichen Wärmeausdehnungskoeffizienten ausgeglichen werden können. Die nachgiebige Schicht kann dabei gleichzeitig als Isolationsschicht ausgebildet sein. Ferner ist es auch möglich, daß sowohl die innere Schicht als auch die äußere Schicht jeweils im wesentlichen gleiche Wärmeausdehnungskoeffizienten und somit ein gleiches Wärmeausdehnungsverhalten aufweisen. Dies hat den Vorteil, daß eventuelle Spannungen aufgrund der unterschiedlichen Temperaturen, insbesondere während der Abkühlphase vermieden werden können.

Die Erfindung wird im folgenden anhand der schematischen Zeichnung näher erläutert. Es zeigen:
- Fig. 1:: im Querschnitt eine Form gemäß der Erfindung und
- Fig. 2:: im Querschnitt eine Form gemäß der Erfindung in einer anderen Ausführungsform.

Die in der Zeichnung dargestellte Gießform 10 besteht aus zwei Formhälften 11, 12, die einen Formhohlraum 13 in der in der Zeichnung dargestellten Schließlage begrenzen. Die Formhälften 11, 12 sind durch nicht näher dargestellte und allgemeine bekannte Mittel hin- und herbewegbar, so daß in der nicht dargestellten Öffnungslage das in dem Hohlraum 13 gebildete Kunststoffteil entnommen werden kann. Die Kunststoffmasse wird durch nicht näher dargestellte und allgemein bekannte Mittel in den Formhohlraum eingebracht, beispielsweise eingespritzt oder extrudiert. Es ist natürlich auch möglich, daß durch die Formhälften 11, 12 mehrere Formnester begrenzt werden, die beispielsweise durch Kanäle miteinander verbunden sind. Ferner ist es möglich, daß auch hohle Kunststoffteile, beispielsweise durch Extrusionsblasformen oder durch Kerne herstellbar sind. Die Formenvielfalt ist allgemein bekannt und bedarf daher an dieser Stelle keiner weiteren Erläuterungen.

Jede der Formhälften 11, 12 weist einen inneren Bereich 14, 15 auf, deren innere Wandungen 16, 17 unmittelbar an den Hohlraum 13 angrenzen. Die inneren Bereiche 14, 15 sind von äußeren Bereichen 18, 19 der Formhälften 11, 12 umgeben. Wie in der Zeichnung schematisch dargestellt, sind die Abmessungen der äußeren Bereiche 18, 19 größer bemessen als die Abmessungen der inneren Bereiche 14, 15.

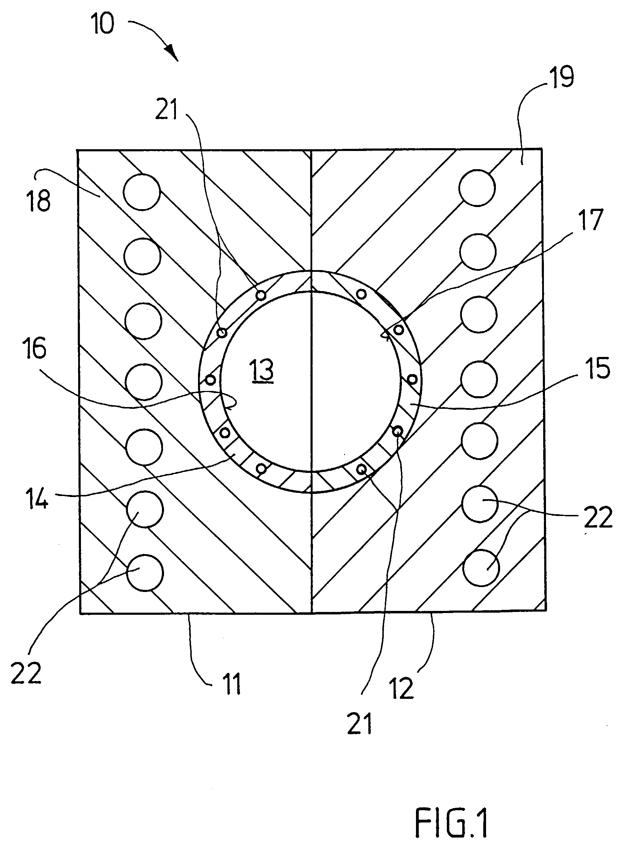

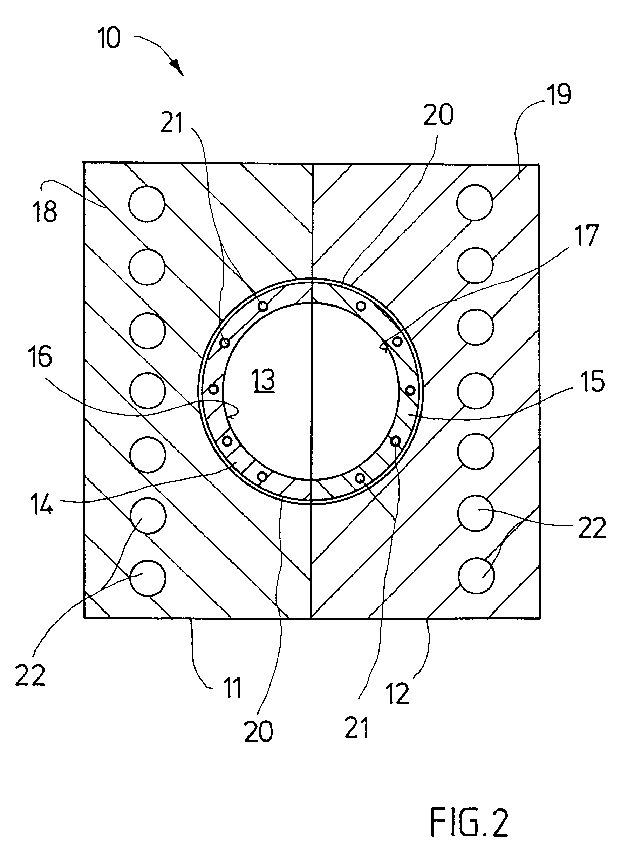

Bei der in Figur 1 gezeigten Ausführungsform grenzt der innere Bereich 14, 15 mit seiner äußeren Wandung unmittelbar an den inneren Bereich 18, 19 an. Bei der in Figur 2 dargestellten Ausführungsform ist jeweils zwischen dem inneren Bereich 14, 15 und dem äußeren Bereich 18, 19 eine Isolationsschicht 20 vorgesehen. Die Isolationsschicht 20 kann beispielsweise aus üblichen Isolationsmaterialen bestehen. Ansonsten stimmen die Ausführungsformen gemäß Fig. 1 und Fig. 2 überein, und gleiche Elemente sind mit gleichen Bezugszeichen versehen.

Der innere Bereich 14, 15 einer Formhälfte 11, 12 ist mit Kanälen 21 versehen, die zur Kühlung des inneren Bereiches durch konvektive Kühlung dienen. Durch diese Kanäle 21 wird beispielsweise Wasser als Kühlmittel geleitet, um während der Abkühlphase den inneren Bereich und somit die inneren Wandungen 16, 17 der inneren Bereiche 14, 15 auf eine Temperatur zu kühlen, um den Kunststoffkörper entnehmen zu können. Durch entsprechende, nicht dargestellte Ventileinrichtungen kann natürlich auch vorgesehen werden, daß durch diese Kanäle 21 während des Aufheizvorganges ein entsprechendes Heizmedium, beispielsweise ein Thermoöl geleitet wird. Es können selbstverständlich auch andere zusätzliche Kanäle im inneren Bereich vorhanden sein.

Selbstverständlich ist es auch möglich, daß der innere Bereich elektrisch beheizt wird. Die elektrischen Anschlüsse und die erforderlichen Versorgungsleitungen sind in der Zeichnung nicht dargestellt.

Der äußere Bereich 18, 19 der Formhälften weist ebenfalls Kanäle 22 auf, durch die beispielsweise ein Heizmedium zur Aufrechterhaltung der Temperatur geleitet wird. Es kann jedoch auch hier vorgesehen werden, daß die äußeren Bereiche 18, 19 elektrisch beheizt werden.

Bei der in der Zeichnung dargestellten Ausführungsform erfolgt die Kühlung des inneren Bereiches 14, 15 durch konvektive Kühlung. Es ist natürlich auch möglich, daß eine andere Kühlung vorgesehen werden kann, in der beispielsweise die Umkehrung des thermoelektrischen Effektes ausgenutzt wird. Ferner kann vorgesehen werden, daß zwischen der äußeren Wandung des inneren Bereiches 14, 15 und der inneren Wandung des äußeren Bereiches 18, 19 eine nachgiebige Schicht vorhanden ist, um Wärmespannungen auszugleichen. Es kann natürlich auch vorgesehen werden, daß der innere Bereich 14, 15 und der äußere Bereich 18, 19 nicht unmittelbar in körperlichem Kontakt zueinanderstehen, sondern daß zwischen ihnen ein schmaler Spalt vorhanden ist, so daß ebenfalls Wärmespannungen vermieden werden können. Dieser Spalt kann beispielsweise mit einem Fett oder einem anderen Mittel gefüllt sein, das zum einen eine unterschiedliche Ausdehnung des inneren und des äußeren Bereiches zuläßt und ein ausreichendes Wärmeleitvermögen aufweist.

### Bezugszeichenliste

- 10: Form
- 11: Formhälfte
- 12: Formhälfte
- 13: Hohlraum
- 14: innerer Bereich
- 15: innerer Bereich
- 16: innere Oberfläche
- 17: innere Oberfläche
- 18: äußerer Bereich
- 19: äußerer Bereich
- 20: Isolationsschicht
- 21: Kanäle
- 22: Kanäle

## Patentansprüche

1. Verfahren zum Herstellen eines Körpers aus Kunststoff, bei welchem Verfahren der Kunststoff in eine temperierbare Form (10), die wenigstens einen Hohlraum (13) begrenzt, dessen Kontur der äußeren Kontur des Körpers entspricht, eingegeben wird, wobei während der Herstellung die Form erhitzt wird und zumindest die Entnahme des Körpers bei gekühlter Form erfolgt, wobei der sich an den Hohlraum (13) anschließende innere Bereich (14, 15) der Form (10) zumindest teilweise unabhängig von dem dem Hohlraum abgekehrten äußeren Bereich (18, 19) der Form (10) gekühlt und aufgeheizt wird, während der äußere Bereich (18, 19) auf einer Temperatur gehalten wird, die höher als die Temperatur der inneren Wandungen (16, 17) des inneren Bereichs (14, 15) bei der Entnahme ist.

2. Verfahren nach Anspruch 1, dadurch gekennzeichnet, daß der äußere Bereich (18, 19) der Form (10) auf einer im wesentlich konstanten Temperatur gehalten wird, die in etwa der Prozeßtemperatur entspricht.

3. Verfahren nach Anspruch 1 oder 2, dadurch gekennzeichnet, daß der äußere Bereich (18, 19) der Form (10) auf einer Temperatur gehalten wird, die höher als die Prozeßtemperatur ist.

4. Verfahren nach einem der Ansprüche 1 bis 3, dadurch gekennzeichnet, daß wenigstens ein Bereich (14 , 15, 18, 19) konvektiv geheizt wird.

5. Verfahren nach einem der Ansprüche 1 bis 4, dadurch gekennzeichnet, daß wenigstens ein Bereich (14, 15, 18, 19) elektrisch beheizt wird.

6. Verfahren nach einem der Ansprüche 1 bis 5, dadurch gekennzeichnet, daß zumindest der innere Bereich (14, 15) konvektiv gekühlt wird.

7. Verfahren nach einem der Ansprüche 1 bis 6, dadurch gekennzeichnet, daß zumindest der innere Bereich (14, 15) mit Wasser gekühlt wird.

8. Vorrichtung zum Herstellen eines Körpers aus Kunststoff, die eine Form (10) aufweist, die wenigstens einen Hohlraum (13) begrenzt, dessen innere Kontur der äußeren Kontur des Körpers entspricht, wobei der an den Hohlraum (13) angrenzende innere Bereich (14, 15) der Form (10) zumindest teilweise aus einem Material besteht, das eine andere Temperaturleitfähigkeit hat als das des vom Hohlraum (13) abgekehrten äußeren Bereiches (18, 19) der Form (10), dadurch gekennzeichnet, daß das Material des äußeren Bereiches (18, 19) eine hohe spezifische Wärmekapazität aufweist und ein Temperierungsmittel, mit dem der äußere Bereich (18, 19) auf einer Temperatur gleich oder höher der Prozeßtemperatur haltbar ist.

9. Vorrichtung nach Anspruch 8, dadurch gekennzeichnet, daß der innere Bereich (14, 15) eine höhere Wärmeleitfähigkeit als der äußere Bereich (18, 19) besitzt.

10. Vorrichtung nach Anspruch 8 oder 9, dadurch gekennzeichnet, daß der innere Bereich (14, 15) der Form (10) unabhängig von dem äußeren Bereich (18, 19) temperierbar ist.

11. Vorrichtung nach einem der Ansprüche 8 bis 10, dadurch gekennzeichnet, daß der innere Bereich (14, 15) hinsichtlich seines Volumens kleiner als der äußere Bereich (18, 19) ist.

12. Vorrichtung nach einem der Ansprüche 8 bis 11, dadurch gekennzeichnet, daß zumindest der innere Bereich (14, 15) konvektiv beheizbar ist.

13. Vorrichtung nach einem der Ansprüche 8 bis 12, dadurch gekennzeichnet, daß zumindest der innere Bereich (14, 15) elektrisch beheizbar ist.

14. Vorrichtung nach einem der Ansprüche 8 bis 13, dadurch gekennzeichnet, daß zumindest der innere Bereich (14, 15) konvektiv kühlbar ist.

15. Vorrichtung nach einem der Ansprüche 8 bis 14, dadurch gekennzeichnet, daß zumindest der innere Bereich (14, 15) eine Wasserkühlung aufweist.

16. Vorrichtung nach einem der Ansprüche 9 bis 15, dadurch gekennzeichnet, daß der innere Bereich (14, 15) lösbar mit dem äußeren Bereich (18, 19) verbunden ist.

17. Vorrichtung nach einem der Ansprüche 9 bis 16, dadurch gekennzeichnet, daß der innere Bereich (14, 15) aus einer Aluminiumlegierung besteht.

18. Vorrichtung nach einem der Ansprüche 9 bis 17, dadurch gekennzeichnet, daß der innere Bereich (14, 15) aus einer Kupferlegierung besteht.

19. Vorrichtung nach einem der Ansprüche 9 bis 18, dadurch gekennzeichnet, daß der äußere Bereich (18, 19) aus Stahl besteht.

20. Vorrichtung nach einem der Ansprüche 9 bis 19, dadurch gekennzeichnet, daß zwischen dem inneren Bereich (14, 15) und dem äußeren Bereich (18, 19) wenigstens eine Isolationsschicht (20) angeordnet ist.

21. Vorrichtung nach einem der Ansprüche 9 bis 20, dadurch gekennzeichnet, daß die Isolationsschicht (21) einen temperaturabhängigen Wärmedurchgangskoeffizienten aufweist.

22. Vorrichtung nach einem der Ansprüche 9 bis 21, dadurch gekennzeichnet, daß der Wärmedurchgangskoeffizient der Isolationsschicht (20) einstellbar ist.

23. Vorrichtung nach einem der Ansprüche 9 bis 22, dadurch gekennzeichnet, daß zwischen dem inneren Bereich (14, 15) und dem äußeren Bereich (18, 19) wenigstens eine nachgiebige Schicht angeordnet ist.

24. Vorrichtung nach einem der Ansprüche 9 bis 23, dadurch gekennzeichnet, daß zwischen dem inneren Bereich (14, 15) und dem äußeren Bereich (18, 19) wenigstens ein Zwischenraum vorhanden ist.

## Claims

1. Method of manufacturing a body from plastic, in which method the plastic is inserted into a mould (10), whose temperature can be modified and which bounds at least one cavity (13) whose contour corresponds to the external contour of the body, the mould being heated during the manufacture and at least the extraction of the body taking place with the mould cooled, the inner region (14, 15), which abuts the cavity (13), of the mould (10) being cooled and heated at least partially independently of the outer region (18, 19), facing away from the cavity, of the mould (10), whereas the outer region (18, 19) is kept to a temperature which is higher than the temperature of the inner walls (16, 17) of the inner region (14, 15) during the extraction.

2. Method according to Claim 1, characterised in that the outer region (18, 19) of the mould (10) is kept to an essentially constant temperature, which approximately corresponds to the process temperature.

3. Method according to Claim 1 or 2, characterised in that the outer region (18, 19) of the mould (10) is kept to a temperature which is higher than the process temperature.

4. Method according to one of Claims 1 to 3, characterised in that at least one region (14, 15, 18, 19) is convectively heated.

5. Method according to one of Claims 1 to 4, characterised in that at least one region (14, 15, 18, 19) is electrically heated.

6. Method according to one of Claims 1 to 5, characterised in that at least the inner region (14, 15) is convectively cooled.

7. Method according to one of Claims 1 to 6, characterised in that at least the inner region (14, 15) is cooled with water.

8. Appliance for manufacturing a body from plastic, which appliance has a mould (10) which bounds at least one cavity (13) whose inner contour corresponds to the outer contour of the body, the inner region (14, 15), abutting the cavity (13), of the mould (10) consisting at least partially of a material which has a different thermal conductivity to that of the outer region (18, 19), remote from the cavity (13), of the mould (10), characterised in that the material of the outer region (18, 19) has a higher specific thermal capacity and a temperature modification means by which the outer region (18, 19) can be kept at a temperature equal to or higher than the process temperature.

9. Appliance according to Claim 8, characterised in that the inner region (14, 15) has a higher thermal conductivity than the outer region (18, 19).

10. Appliance according to Claim 8 or 9, characterised in that the inner region (14, 15) of the mould (10) can be altered in temperature independently of the outer region (18, 19).

11. Appliance according to one of Claims 8 to 10, characterised in that with respect to its volume, the inner region (14, 15) is smaller than the outer region (18, 19).

12. Appliance according to one of Claims 8 to 11, characterised in that the inner region (14, 15) at least can be heated convectively.

13. Appliance according to one of Claims 8 to 12, characterised in that the inner region (14, 15) at least can be heated electrically.

14. Appliance according to one of Claims 8 to 13, characterised in that the inner region (14, 15) at least can be cooled convectively.

15. Appliance according to one of Claims 8 to 14, characterised in that the inner region (14, 15) at least has a water cooling system.

16. Appliance according to one of Claims 9 to 15, characterised in that the inner region (14, 15) is releasably connected to the outer region (18, 19).

17. Appliance according to one of Claims 9 to 16, characterised in that the inner region (14, 15) consists of an aluminium alloy.

18. Appliance according to one of Claims 9 to 17, characterised in that the inner region (14, 15) consists of a copper alloy.

19. Appliance according to one of Claims 9 to 18, characterised in that the outer region (18, 19) consists of steel.

20. Appliance according to one of Claims 9 to 19, characterised in that at least one insulating layer (20) is arranged between the inner region (14, 15) and the outer region (18, 19).

21. Appliance according to one of Claims 9 to 20, characterised in that the insulating layer (20) has a heat transition coefficient which is independent of temperature.

22. Appliance according to one of Claims 9 to 21, characterised in that the heat transition coefficient of the insulating layer (20) can be adjusted.

23. Appliance according to one of Claims 9 to 22, characterised in that at least one flexible layer is arranged between the inner region (14, 15) and the outer region (18, 19).

24. Appliance according to one of Claims 9 to 23, characterised in that at least one intermediate space is present between the inner region (14, 15) and the outer region (18, 19).

## Revendications

1. Procédé de fabrication d'un corps en matière plastique, dans lequel procédé la matière plastique est introduite dans un moule (10) dont la température peut être équilibrée et qui délimite au moins une cavité (13) dont le contour correspond au contour extérieur du corps, le moule étant chauffé en cours de fabrication et au moins le démoulage du corps étant effectué dans un moule refroidi, dans lequel procédé la partie intérieure (14, 15) du moule (10) attenante à la cavité (13) peut être refroidie et chauffée indépendamment de la partie extérieure (18, 19) du moule (10) détournée de la cavité, alors que la partie extérieure (18, 19) est maintenue à une température supérieure à la température des parois intérieures (16, 17) de la partie intérieure (14, 15) lors du démoulage.

2. Procédé selon la revendication 1, caractérisé en ce que la partie extérieure (18, 19) du moule (10) est maintenue à une température sensiblement constante qui est pratiquement égale à la température du processus.

3. Procédé selon la revendication 1 ou 2, caractérisé en ce que la partie extérieure (18,19) du moule (10) est maintenue à une température qui est supérieure à la température du processus.

4. Procédé selon l'une quelconque des revendications 1 à 3, caractérisé en ce qu'au moins une partie (14, 15, 18, 19) est chauffée par convection.

5. Procédé selon l'une quelconque des revendications 1 à 4, caractérisé en ce qu'au moins une partie (14, 15, 18, 19) est chauffée par voie électrique.

6. Procédé selon l'une quelconque des revendications 1 à 5, caractérisé en ce qu'au moins la partie intérieure (14, 15) est refroidie par convection.

7. Procédé selon l'une quelconque des revendications 1 à 6, caractérisé en ce qu'au moins la partie intérieure (14, 15) est refroidie à l'eau.

8. Dispositif de fabrication d'un corps en matière plastique, qui comprend un moule (10), qui délimite au moins une cavité (13) dont le contour correspond au contour extérieur du corps, la partie intérieure (14, 15) du moule (10) attenante à la cavité (13) pouvant être réalisée au moins en partie dans un matériau qui présente une conductibilité thermique différente de celle de la partie extérieure (18, 19) du moule (10) détournée de la cavité (13), caractérisé en ce que le matériau de la partie extérieure (18, 19) présente une capacité thermique spécifique élevée et un milieu d'équilibrage de la température, par lequel la partie extérieure (18, 19) est maintenue à une température égale ou supérieure à la température du processus.

9. Dispositif selon la revendication 8, caractérisé en ce que la partie intérieure (14, 15) possède une conductibilité thermique supérieure à celle de la partie extérieure (18, 19).

10. Dispositif selon la revendication 8 ou 9, caractérisé en ce que la température de la partie intérieure (14, 15) du moule (10) peut être équilibrée indépendamment de la partie extérieure (18, 19).

11. Dispositif selon l'une quelconque des revendications 8 à 10, caractérisé en ce que le volume de la partie intérieure (14, 15) est inférieur à celui de la partie extérieure (18, 19).

12. Dispositif selon l'une quelconque des revendications 8 à 11, caractérisé en ce qu'au moins la partie intérieure (14, 15) peut être chauffée par convection.

13. Dispositif selon l'une quelconque des revendications 8 à 12, caractérisé en ce qu'au moins la partie intérieure (14, 15) peut être chauffée par voie électrique.

14. Dispositif selon l'une quelconque des revendications 8 à 13, caractérisé en ce qu'au moins la partie intérieure (14, 15) peut être refroidie par convection.

15. Dispositif selon l'une quelconque des revendications 8 à 14, caractérisé en ce qu'au moins la partie intérieure (14, 15) présente un refroidissement à l'eau.

16. Dispositif selon l'une quelconque des revendications 9 à 15, caractérisé en ce que la partie intérieure (14, 15) est assemblée de manière démontable avec la partie extérieure (18, 19).

17. Dispositif selon l'une quelconque des revendications 9 à 16, caractérisé en ce que la partie intérieure (14, 15) est constituée d'un alliage d'aluminium.

18. Dispositif selon l'une quelconque des revendications 9 à 17, caractérisé en ce que la partie intérieure (14, 15) est constituée d'un alliage de cuivre.

19. Dispositif selon l'une quelconque des revendications 9 à 18, caractérisé en ce que la partie extérieure (18, 19) est constituée d'acier.

20. Dispositif selon l'une quelconque des revendications 9 à 19, caractérisé en ce qu'au moins une couche isolante (20) est disposée entre la partie intérieure (14, 15) et la partie extérieure (18, 19).

21. Dispositif selon l'une quelconque des revendications 9 à 20, caractérisé en ce que la couche isolante (21) présente un coefficient de transmission de chaleur qui dépend de la température.

22. Dispositif selon l'une quelconque des revendications 9 à 21, caractérisé en ce qu'il est possible de réguler le coefficient de transmission de chaleur de la couche isolante (20).

23. Dispositif selon l'une quelconque des revendications 9 à 22, caractérisé en ce qu'au moins une couche flexible est disposée entre la partie intérieure (14, 15) et la partie extérieure (18, 19).

24. Dispositif selon l'une quelconque des revendications 9 à 23, caractérisé en ce qu'il existe au moins un espace intermédiaire entre la partie intérieure (14, 15) et la partie extérieure (18, 19).
